# EUROPEAN PATENT APPLICATION

(11) **EP 2 312 837 A2**
(43) Date of publication of application: **20.04.2011**
(21) Application number: 10183863.9
(22) Date of filing: 30.09.2010
(51) Int. Cl.: H04N 5/63

(54) **Display apparatus, television and method for controlling power output of the display apparatus**

(30) Priority: 01.10.2009 KR 20090094039
(71) Applicant: Samsung Electronics Co., Ltd., Suwon-si, Gyeonggi-do 442-742 (KR)
(72) Inventor: Kim, In-beom, Seoul (KR)
(74) Representative: Van Someren, Petronella F. H. M.

(57) **Abstract**

A display apparatus, a television, and a method for controlling power output of the display apparatus are provided. The display apparatus includes a display unit; a video signal processor; a power supply which supplies power to the display unit and the video signal processor; a connector receptacle to which a connector of an external device is connected and which includes terminals provided for data communication and power output from the power supply to at least the external device; a switching unit which switches voltage output from the power supply to the connector receptacle; and a switching control circuit which senses whether the plurality of terminals in the connector receptacle are in electrical contact with each other, and controls the switching unit so that the voltage output from the power supply is selectively allowed or cut off with respect to the connector receptacle according to results of the sensing.

## Description

Apparatuses and methods consistent with the exemplary embodiments to a display apparatus, a television and a method for controlling power output of the display apparatus, and more particularly, to a display apparatus having a structure for internally controlling power output, and a television and a method for controlling power output of the display apparatus.

A display apparatus such as a television, a monitor, etc. processes a video signal input from the exterior, and displays an image on a display panel. The display apparatus has a main body internally provided with a display panel, a component for receiving and processing a video signal, a power supply for supplying power to the display panel, the component, etc. Also, the display apparatus includes a supporting stand for supporting the main body onto such as the ground, a desk, a wall, or the like as various installation surfaces.

In viewing an image displayed in such a display apparatus, there may be difficulty in viewing an image depending on a user's position with regard to the display apparatus. Accordingly, there has been proposed a configuration that the supporting stand has a built-in motor for rotating the main body of the display apparatus at an angle.

However, the motor uses power for operating the supporting stand in the above-described configuration. Therefore, an adapter for supplying a predetermined voltage, for example, a voltage of 13V, separately from the main body is provided in the supporting stand. Also, to rotate the main body by operating the supporting stand, a user presses a physical button configuration connected to the motor the supporting stand. With this configuration, a user can operate the supporting stand to rotate the main body at a desired position.

According to an aspect of an exemplary embodiment, there is provided a display apparatus including: a display unit; a video signal processor which processes a video signal to be displayed on the display unit; a power supply which supplies power to the display unit and the video signal processor; a connector receptacle to which a connector of an external device is connected and which includes a plurality of terminals provided for data communication and power output from the power supply to at least the external device; a switching unit which switches voltage output from the power supply to the connector receptacle; and a switching control circuit which senses whether the plurality of terminals in the connector receptacle are in electrical contact with each other, and controls the switching unit so that the voltage output from the power supply is selectively allowed or cut off with respect to the connector receptacle according to results of the sensing.

The plurality of terminals may include a power output terminal and a ground terminal respectively connected to the power supply, and the switching control circuit may sense whether the power output terminal and the ground terminal are caused to be in contact with each other by the connector connected to the connector receptacle, and selectively allow or cut off the voltage output with respect to the power output terminal according to results of the sensing.

The switching control circuit may cut off the voltage output to the power output terminal if it is sensed that the power output terminal and the ground terminal are in contact with each other, and may allow the voltage output to the power output terminal if it is sensed that the power output terminal and the ground terminal are not in contact with each other.

The power supply may output a first voltage and a second voltage to the power output terminal and the ground terminal, respectively, and the switching control circuit may determine that the power output terminal and the ground terminal are in contact with each other if the first voltage decreases to a ground level.

The switching control circuit may determine that the contact is released if the second voltage that is dropped from a first level to a second level by the contact returns to the first level.

The power supply may output a first voltage and a second voltage to the power output terminal and the ground terminal, respectively, and the switching control circuit may include a first sensor to sense whether a level of the first voltage output from the switching unit is dropped down; a second sensor to sense whether a level of the second voltage is changed corresponding to the contact or a release of the contact; and a controller to selectively control a switching operation of the switching unit in response to respective sensing results.

The first voltage and the second voltage respectively output from the first sensor and the second sensor may be input to one input terminal of the controller, and the first sensor may drop the first voltage to the same level as the second voltage in the state that the contact is released.

The second sensor may drop the second voltage from a first level to a second level and output the dropped voltage to the controller if the contact is performed, and may change the second voltage from the second level to the first level and output the changed voltage to the controller if the contact is released.

The second sensor may include at least two voltage dividing resistors arranged in series with a node therebetween branched from an output line of the second voltage to the controller, and provided for selectively changing the voltage output from the node according to whether the contact is performed.

The controller may use the second voltage supplied from the second sensor as an operating power for the controller while an output of the first voltage is cut off by the switching unit.

The external device may include a supporting unit that supports the display apparatus and rotates the display apparatus at an angle, and the supporting unit may receive power for rotating the display apparatus from the power supply through the connector.

According to aspect of another exemplary embodiment, there is provided a television including a main body; a supporting unit which supports the main body and rotates the main body to be at a certain angle; and a connector which is provided for connection between the main body and the supporting unit and supplies power for rotating the main body from the main body to the supporting unit, the main body including a power supply; a connector receptacle to which a connector of an external device is connected and which includes a plurality of terminals provided for data communication and power output from the power supply to at least the external device; a switching unit which switches voltage output from the power supply to the connector receptacle; and a switching control circuit which senses whether the plurality of terminals in the connector receptacle are in electrical contact with each other, and controls the switching unit so that the voltage output from the power supply can be selectively allowed or cut off with respect to the connector receptacle according to results of the sensing.

The plurality of terminals may include a power output terminal and a ground terminal respectively connected to the power supply, and the switching control circuit may sense whether the power output terminal and the ground terminal are caused to be in contact with each other by the connector connected to the connector receptacle, and selectively allow or cutoff the voltage output with respect to the power output terminal.

The connector may include a first terminal and a second terminal provided for data communication between the main body and the supporting unit; a third terminal connected to the power output terminal and supplying voltage output from the power supply to the supporting unit; and a fourth terminal adjacent to the third terminal and connected to the ground terminal.

According to aspect of another exemplary embodiment, there is provided a method of controlling power output in a display apparatus including a power supply, the method including: receiving a connector of an external device in a connector receptacle including a plurality of terminals connected to the power supply; sensing whether the plurality of terminals come into contact with each other; and cutting off voltage output from the power supply to the connector receptacle if it is sensed that the plurality of terminals are in contact with each other, and allowing the voltage output from the power supply to the connector receptacle if it is sensed that the plurality of terminals are not in contact with each other.

The connector receptacle may include a power output terminal and a ground terminal respectively connected to the power supply, and the sensing may include sensing whether the power output terminal and the ground terminal are in contact with each other by the connector connected to the connector receptacle.

The method may further include outputting a first voltage and a second voltage from the power supply to the power output terminal and the ground terminal, respectively, and the sensing may include determining that the power output terminal and the ground terminal are in contact with each other if the first voltage is dropped to a ground level.

The sensing may further include determining that the contact is released if the second voltage that decreased from a first level to a second level by the contact returns to the first level.

The method may further include outputting a first voltage and a second voltage from the power supply to the power output terminal and the ground terminal, respectively, and the sensing may include sensing whether a level of the first voltage is dropped down, and sensing whether a level of the second voltage is changed corresponding to the contact or the contact release.

The external device may include a supporting unit that supports the display apparatus and rotates the display apparatus at a certain angle by receiving power for rotating the display apparatus through the connector.

The above and/or other aspects will become apparent and more readily appreciated from the following description of the exemplary embodiments, taken in conjunction with the accompanying drawings, in which:
FIG. 1 is a perspective view of a display apparatus according to an exemplary embodiment;
FIG. 2 is a perspective view showing a configuration of a supporting unit different from that of the display apparatus of FIG. 1;
FIG. 3 is a block diagram of the display apparatus of FIG. 1;
FIGS. 4A and 4B are lateral cross-section views showing a connector coupled to a connector receptacle in the display apparatus of FIG. 1;
FIG. 5 is a block diagram of a power output control circuit in the display apparatus of FIG. 3;
FIG. 6 is an example circuit diagram of the power output control circuit of FIG. 5;
FIG. 7 is a control flowchart showing an example of operations of the power output control circuit in the display apparatus of FIG. 1; and
FIG. 8 is a control flowchart showing an example of operations of the power output control circuit in a case in which a short circuit is released when a first voltage is cut off in the display apparatus of FIG. 1.

Below, exemplary embodiments will be described in detail with reference to accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

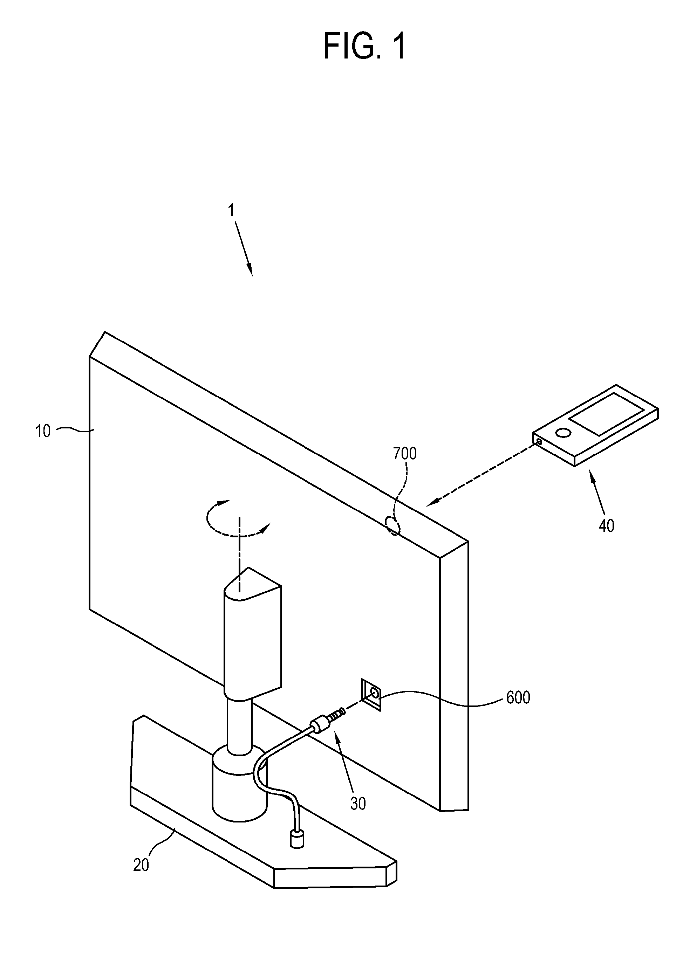

FIG. 1 is a perspective view of a display apparatus 1 according to an exemplary embodiment.

In this exemplary embodiment, the display apparatus 1 is achieved by a television, but is not limited thereto. For example, alternatively, the inventive concept can be applied to an apparatus for displaying an image like a monitor or the like.

As shown in FIG. 1, the display apparatus 1 in this exemplary embodiment includes a main body 10 where an image is displayed, a supporting unit 20 supporting the main body 10 with regard to the ground or a stand or tabletop or the like, a connector 30 for connection between the main body 10 and the supporting unit 20, and a remote controller 40 to be manipulated by a user.

The main body 10 internally includes various components for receiving, processing and displaying an image. If a user's position is not proper to view an image displayed on the main body 10, a user manipulates the remote controller 40 to send a command to the main body 10. This command includes information about a rotation order, a rotation direction, a rotation angle, etc. The remote controller 40 transmits such a command to the main body 10 through a ZigBee communication, a radio frequency command, etc.

The main body 10 includes a control signal receiver 700 capable of receiving a command from the remote controller 40. The command received in the control signal receiver 700 is analyzed with respect to information, and then data corresponding to this command is sent to the supporting unit 20.

The connector 30 connects the main body 10 and the supporting unit 20 so that the data can be transmitted from the main body 10 to the supporting unit 20. Here, the connector 30 is provided for not only data transmission between the main body 10 and the supporting unit 20 but also power supply from the main body 10 to the supporting unit 20.

The connector 30 is connected to a connector receptacle 600 provided in the outside of the main body 10 so as to send data and power. Although it is not limited, the connector 30 may be configured on the basis of a universal asynchronous receiver transmitter (UART) by way of example.

The supporting unit 20 is achieved by a supporting stand for supporting the main body 10. The supporting unit 20 internally includes a motor (not shown) and a data processor (not shown), and drives the motor (not shown) on the basis of data and power received through the connector 30, thereby rotating the main body 10 according to a direction and at an angle.

With this configuration, it is possible to supply power from the main body 10 to the supporting unit 20 without an additional adapter for supplying power to drive the supporting unit 20.

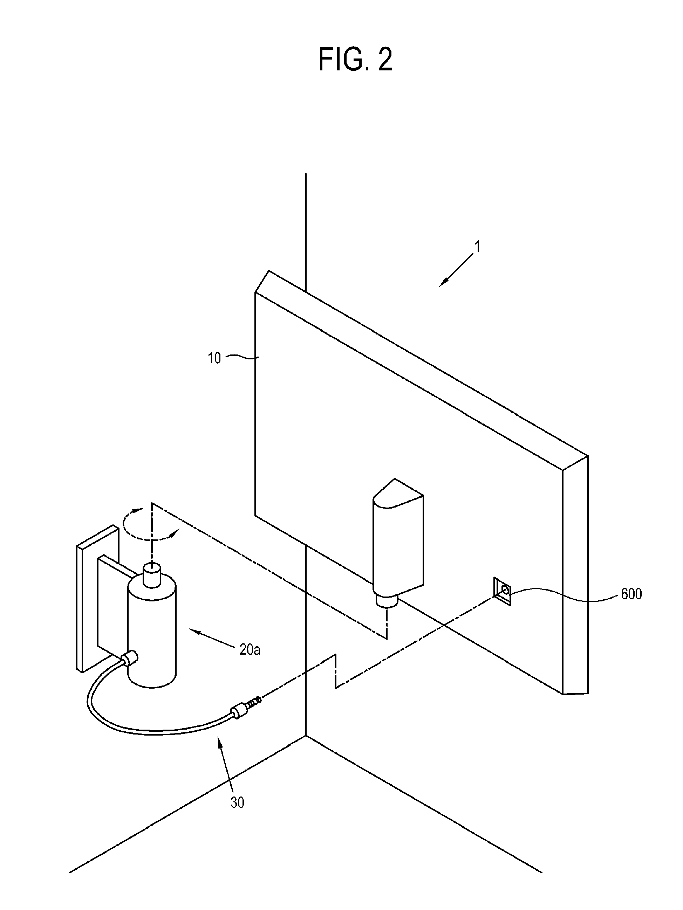

In FIG. 1, the supporting unit 20 supports the main body 10 with respect to the ground or a table top, etc., but is not limited thereto. Alternatively, a supporting unit 20a may support the main body 10 with respect to a vertical or inclined wall as shown in FIG. 2.

The supporting unit 20a shown in FIG. 2 is achieved by a wall-mount type, and includes a built-in motor (not shown) to rotate the main body 10 at an angle. Like the supporting unit 20 of FIG. 1, the supporting unit 20a receives driving power from the main body 10 through the connector 30 connected to the main body 10.

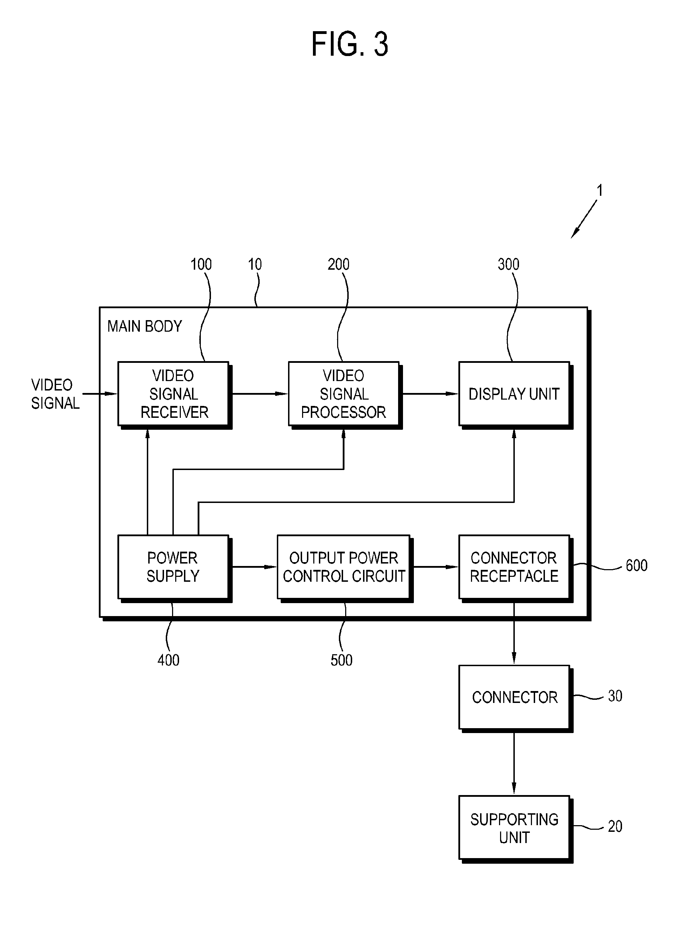

Below, detailed configurations of the display apparatus 1 will be described with reference to FIG. 3. FIG. 3 is a block diagram of the display apparatus of FIG. 1.

As shown in FIG. 3, the main body 10 includes a video signal receiver 100 to receive a video signal from the exterior, a video signal processor 200 to process the received video signal to be displayed as an image, a display unit 300 to display an image, a power supply 400 to supply power to the video signal receiver 100, the video signal processor 200 and the display unit 300, and a power output control circuit 500 to control power output from the power supply 400 with respect to the connector receptacle 600.

The video signal receiver 100 receives a video signal from an image source (not shown) which is not limited. The video signal receiver 100 may be achieved in various types. For example if the display apparatus 1 is a television, the video signal receiver 100 wirelessly receives a radio frequency (RF) signal from a broadcasting station (not shown), or receives a video signal based on composite video, component video, super video, SCART, high definition multimedia interface (HDMI), or the like standards. Also, the video signal receiver 100 may be achieved to receive a video signal of the HDMI, a digital video interactive (DVI), D-sub for transmitting RGB signals based on VGA or the like standards in the case where the display apparatus 1 is used as a monitor for a computer system.

The video signal processor 200 performs various video processes with respect to the video signal transmitted from the video signal receiver 100. Here, the kind of video processes to be performed in the video signal processor 200 is not limited. For example, various video processes may include decoding and encoding corresponding to diverse video formats, de-interlacing, frame refresh rate conversion, scaling, noise reduction for improving image quality, detail enhancement, etc.

The display unit 300 displays an image processed by the video signal processor 200. The display unit 300 may be achieved by various display types such as liquid crystal, plasma, light-emitting diode, surface-conduction electron-emitter, carbon nano-tube, nano-crystal, etc. without any limitation.

The power supply 400 supplies power for operating the foregoing components of the main body 10. The power supply 400 receives alternating current (AC) power from the exterior, converts the AC power into direct current (DC) power, and adjusts the DC power to have voltage levels adapted for respective components, thereby supplying the power to the respective components. In this exemplary embodiment, the power supply 400 is achieved by a switching mode power supply (SMPS), but other types of power supplies are contemplated.

The power supply 400 outputs a voltage having a certain level to the connector receptacle 600, so that the voltage for driving the supporting unit 20 can be supplied to the supporting unit 20 through the connector 300 connected to the connector receptacle 600.

The connector receptacle 600 is provided in an outside of the main body 10 so that the connector 30 can be connected thereto, and includes a plurality of terminals corresponding to terminals of the connector 30 to supply data or power. In this exemplary embodiment, the connector receptacle 600 includes four terminals corresponding to those of the connector 30, and the respective terminals include terminals for data communication, power and ground.

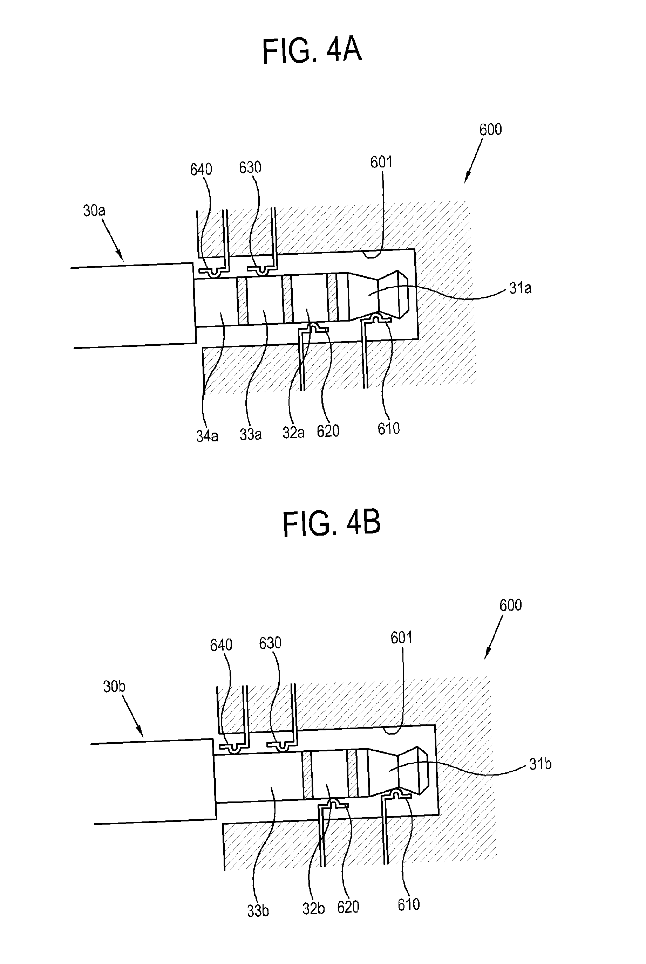

Referring to FIGS. 4A and 4B, when the connector 30 is connected to the connector receptacle 600, the connection of each terminal is as follows. FIGS. 4A and 4B are lateral cross-section views showing that the connector 30a, 30b respectively coupled to the connector receptacle 600 in the display apparatus of FIG. 1.

As shown in FIG. 4A, the connector receptacle 600 includes a connector accommodating part 601 to accommodate an end part of the connector 30a, and a first receptacle terminal 610, a second receptacle terminal 620, a third receptacle terminal 630 and a fourth receptacle terminal 640 sequentially arranged at a side of the connector accommodating part 601. Each receptacle terminal 610, 620, 630, 640 is insulated from its adjacent terminals.

The respective receptacle terminals 610, 620, 630 and 640 are sequentially arranged from the right to the left in FIG. 4A, i.e., in a direction of disconnecting the connector 30a from the connector accommodating part 601. That is, when the connector 30a is inserted in the connector accommodating part 601, an end part of the connector 30a comes into contact with the fourth receptacle terminal 640 first and the first receptacle terminal 610 last.

The terminals are assigned various functions. For example, the first receptacle terminal 610 is used in transmitting data from the supporting unit 20 to the main body 10, and the second receptacle terminal 620 is used in transmitting data from the main body 10 to the supporting unit 20.

The third receptacle terminal 630 is a power output terminal through which a voltage having a certain level is output from the power supply 400, and the fourth receptacle terminal 640 is a ground terminal connected to the power supply 400. Here, the third receptacle terminal 630 and the fourth receptacle terminal 640 are adjacent to each other.

The connector 30a includes four connector terminals corresponding to the respective receptacle terminals 610, 620, 630 and 640 at the end part thereof to be accommodated in the connector accommodating part 601. In particular, the connector includes a first connector terminal 31a and a second connector terminal 32a respectively corresponding to the first receptacle terminal 610 and the second receptacle terminal 620 for the data communication, and a third connector terminal 33a corresponding to the third receptacle terminal 630 to receive power from the power supply 400, and a fourth connector terminal 34a corresponding to the fourth receptacle terminal 640.

In the case of FIG. 4A, the receptacle terminals 610, 620, 630 and 640 are individually in contact with the connector terminals 31a, 32a, 33a and 34a, and insulated from one another. Thus, data transmission and power supply can be normally implemented between the main body 10 and the supporting unit 20.

On the other hand, referring to FIG. 4B, as opposed to the foregoing connector 30a having the four connector terminals 31a, 32a, 33a and 34a, a separate connector 30b including three connector terminals may be connected to the connector receptacle 600. In particular, the connector 30b includes a first connector terminal 31b, a second connector terminal 32b, and the third connector terminal 33b, which is employed in transmitting an audio signal or the like.

However, when the connector 30b is connected to the connector receptacle 600, the third receptacle terminal 630 and the fourth receptacle terminal 640 come into electric contact with each other, i.e., short-circuited by the third connector terminal 33b. Since both the third receptacle terminal 630 and the fourth receptacle terminal 640 are connected to the power supply 400, the short-circuit may generate overcurrent among the third receptacle terminal 630, the fourth receptacle terminal 640 and the power supply 400. Such overcurrent may cause failure or ignition in the main body 10.

Even in the case of FIG. 4A, when the connector 30a is accommodated in the connector accommodating part 601, each connector terminal 31a, 32a, 33a and 34a moves while coming into contact with the third receptacle terminal 630 and the fourth receptacle terminal 640. Therefore, while the connector 30a is connected to the connector receptacle 600, the third receptacle terminal 630 and the fourth receptacle terminal 640 may be short-circuited with each other.

To prevent such a short-circuit, the main body 10 includes the power output control circuit 500 to control a voltage output from the power supply 400 to the connector receptacle 600. The power output control circuit 500 cuts off power output to the third receptacle terminal 630 when the short-circuit is generated, and allows power output to the third receptacle terminal 630 when the short-circuit is released and the third receptacle terminal 630 and the fourth receptacle terminal 640 are insulated from each other.

Thus, when an improper connector such as the connector 30b shown in FIG. 4B is inserted in the connector receptacle 600 by a careless user, or when a short-circuit is generated due to a structural cause even though the proper connector 30 is connected to the connector receptacle 600, a voltage output to the connector receptacle 600 is cut off, thereby protecting the main body 10 from the overcurrent.

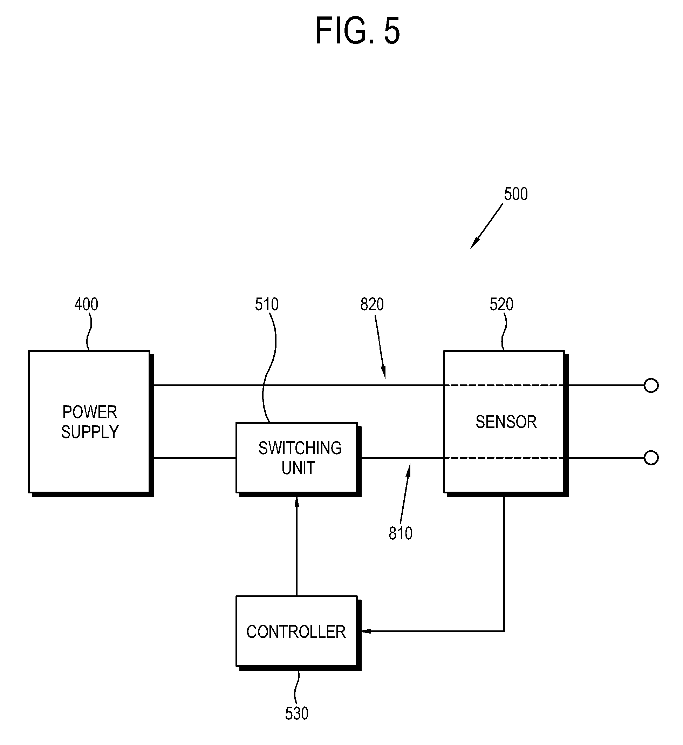

Below, configurations of the power output control circuit 500 will be described with reference to FIG. 5. FIG. 5 is a block diagram of the power output control circuit 500 in the display apparatus of FIG. 3.

As shown in FIG. 5, the power supply 400 includes a power output line 810 through which a first voltage having a certain level is output, and a ground line 820 through which a second voltage having a certain level is output. The power output line 810 has an end part connected to the third receptacle terminal 630 (refer to FIG. 4A), and the ground line 820 has an end part connected to the fourth receptacle terminal 640 (refer to FIG. 4A). Here, the power output line 810 and the ground line 820 are insulated from each other.

For convenience, a voltage output from the power supply 400 to the power output line 810 will be called the first voltage, and a voltage output from the power supply 400 to the ground line 820 will be called the second voltage.

The power output control circuit 500 includes a switching unit 510 for switching the first voltage output through the power output line 810, and a switching control circuit for controlling the switching unit 510.

The switching unit 510 is achieved by a switching integrated circuit (IC), and provided on the power output line 810. The switching unit 510 may control the output of a voltage on the basis of an input logic signal. For example, if a high signal is input from the exterior, the voltage output is allowed. On the other hand, if a low signal is input from the exterior, the voltage output is cut off. However, this is only an example. Alternatively, the voltage output may be allowed if the low signal is input, and the voltage output may be cut off if the high signal is input.

Also, the switching unit 510 may control the output of the voltage on the basis of a level of an input voltage. For example, the voltage output may be allowed if the level of the input voltage is higher than a threshold level, and the voltage output may be cut off if the level of the input voltage is lower than the threshold level.

The switching control circuit includes the sensor 520 for sensing whether the power output line 810 and the ground line 820 are short-circuited with or insulated by the connector 30 connected to the connector receptacle 600, and the controller 530 for controlling a switching operation of the switching unit 510 according to sensing results of the sensor 520.

The sensor 520 senses whether the third receptacle terminal 630 (refer to FIG. 4A) used as the power output terminal and the fourth receptacle terminal 640 (refer to FIG. 4A) used as the ground terminal are short-circuited and thus the power output line 810 and the ground line 820 are short-circuited. To this end, the sensor 520 senses a change in each level of the first voltage of the power output line 810 and the second voltage of the ground line 820, and thus determines whether the power output line 810 and the ground line 820 are short-circuited or the short-circuit is released on the basis of the sensing result.

In more detail, according to an exemplary embodiment, if the power output line 810 and the ground line 820 are short-circuited, the first voltage is dropped down to the ground level and correspondingly the second voltage is dropped down to a certain level. On the other hand, if the short-circuit is released, the second voltage returns to its original level. The sensor 520 senses this phenomenon and transmits the sensing results to the controller 530.

The controller 530 is achieved by, for example, a control IC, and outputs a control signal for operating the switching unit 510 in response to the sensing results received from the sensor 520. In other words, if the sensor 520 senses a short-circuit, the controller 530 outputs a logic signal to the switching unit 510, thereby controlling the switching unit 510 to cut off a voltage output. On the other hand, when the sensor 520 senses that the short-circuit is released, the controller 530 outputs a different logic signal to the switching unit 510, thereby controlling the switching unit 510 to allow the voltage output.

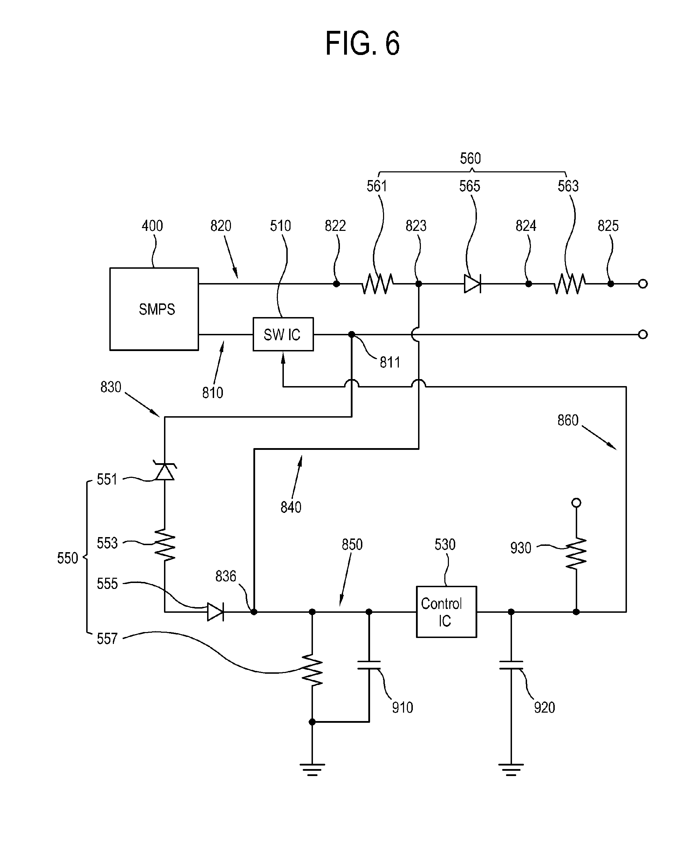

Below, circuit elements of the power output control circuit 500 according to an exemplary embodiment will be describe with reference to FIG. 6. FIG. 6 is an example circuit diagram of the power output control circuit 500.

FIG. 6 shows only the circuit elements that are directly related to this exemplary embodiment . Likewise, in realizing the power output control circuit 500 and the display apparatus 1 according to an exemplary embodiment, there may be additional elements that are needed but not described in this exemplary embodiment.

As shown in FIG. 6, the power supply 400, the switching unit 510 and the controller 530 are achieved by an SMPS 400, a switching IC 510 and a controller IC, respectively. Further, the sensor 520 includes a first sensor 550 for sensing a voltage drop on the power output line 810, and a second sensor sensing change in a voltage level on the ground line 820.

The SMPS 400 outputs a voltage of, for example, about 13V through the power output line 810, and outputs a voltage of, for example, about 5V through the ground line 820. The voltage output by the SMPS 400 through the power output line 810 is a voltage for driving the supporting unit 20, and the voltage output through the ground line 820 is a voltage for sensing a short-circuit. The voltage levels shown in the following exemplary embodiments are merely an example for explaining the exemplary embodiments, and may be varied accordingly.

The switching IC 510 is provided on the power output line 810, so that a voltage output can be controlled according to operations. Further, a first node 811 where a first sensing line 830 is branched is provided on the power output line receiving a voltage from the switching IC 510 at a posterior end of the switching IC 510.

Here, there is no resistor on the power output line 810, so that power loss can be minimized in consideration of a load connected to a posterior end of the power output line 810.

The first sensor 550 is provided on the first sensing line 830 and a control input line 850 to be described later. The first sensor 550 includes a zener diode 551, a resistor 553 and a diode 555 arranged in series along the first sensing line 830 from the first node 811, and a resistor 557 arranged in a line branched from the control input line 850.

The second sensor 560 is provided on the ground line 820. The second sensor 560 includes a first resistor 561 and a second resistor 563 arranged in series along a voltage output direction of the ground line 820, and a diode 565 placed between the first and second resistors 561 and 563.

On the ground line 820, there are a second node 822 between the SMPS 400 and the first resistor 561, a third node 823 between the first resistor 561 and the diode 565, a fourth node 824 between the diode 565 and the second resistor 563, and a fifth node 825 at a posterior end of the second resistor 563 in sequence. Here, the second sensing line 840 is branched from the third node 823.

The control IC 530 includes the control input line 850 to which a voltage is output from the first sensor 550 and the second sensor 560, and a control output line 860 to output a control signal for controlling the switching IC 510 in response to an input voltage level. The control input line 850 is formed at a sixth node 836 where the first sensing line 830 and the second sensing line 840 join together, so that a sum of the voltages respectively output from the first and second senor 550 and 560 can flow therethrough. That is, one kind of voltage is input to the control IC 530.

To operate the control IC 530, there is needed a voltage at least equal to or higher than 0.9V. For example, if the level of the input voltage is equal to or lower than 4.2V, the control IC 530 outputs a low signal. On the other hand, if the level of the input voltage is equal to or higher than 5V, the control IC 530 outputs a high signal.

Further, capacitors 910 and 920 are provided on lines branched from the control input line 850 and the control output line 860, respectively, so that a voltage or signal flowing on the control input line 850 and the control output line 860 can be prevented from rippling.

A pull-up resistor 930 is provided on a line branched from the control output line 860, and receives a voltage of about 3.3V, for example. The pull-up resistor 930 adjusts the control IC 530 to forcibly output a high signal if the control IC 530 malfunctions.

With this circuit configuration, operations of the circuit will be described with respect to each case of a normal state, a short-circuited state, a voltage cut-off state due to the short-circuit, and a released short-circuit state.

First, the normal state where the power output line 810 and the ground line 820 are insulated from each other will be described below.

The SMPS 400 outputs voltages of 13V and 5V to the power output line 810 and the ground line 820, respectively. The switching IC 510 allows the voltage output, and thus the first node 811 also has a voltage of 13V. Besides, the second to fifth nodes 822 to 825 have voltage of 5V.

The voltage of 13V applied from the first node 811 to the first sensing line 830 drops across the zener diode 551, and then is adjusted by the resistors 553 and 557 and the diode 55. That is, the voltage applied from the first sensing line 830 to the sixth node 836 is adjusted to about 5V which is equal to the voltage applied from the third node 823 to the sixth node 836 along the second sensing line 840. Thus, the voltage of 5V is input to the control IC 530.

If the voltage of 5V is input to the control IC 530, the high signal is output to the switching IC 510, so that the switching IC 510 keeps allowing the voltage output.

Thus, the voltage of 13V output from the SMPS 400 can be supplied through the power output line 810.

Second, the short-circuited state where the power output line 810 and the ground line 820 are short-circuited with each other will be described below.

If the power output line 810 and the ground line 820 are short-circuited, the voltage level on the power output line 810 is dropped from 13V to the ground level. Since the voltage at the first node 811 is the ground level, the voltage output from the first sensor 550 is 0V.

The voltage drop sequentially occurs in the second node 822 to the fifth node 825. The second node 822 has 5V, and the fifth node has the ground level. Therefore, the third node 823 and the fourth node 824 have levels dropped from 5V to the ground level using two voltage dividing resisters 561 and 563 and the diode 565. Here, the diode 565 prevents voltage from being applied from the posterior end of the ground line 820 to the SMPS 400.

The voltage of 1.4V is applied from the third node 823 between two voltage dividing resistors 561 and 563 to the sixth node 836. At this time, the diode 555 prevents the voltage of 1.4V from being applied backward to the first sensing line 830.

With regard to the sixth node 836, the first sensor 550 outputs 0V and the second sensor 560 outputs 1.4V, so that the control IC 530 receives the voltage of 1.4V. The control IC 530 outputs the low signal corresponding to this voltage level, and thus the switching IC 510 cuts off the output voltage output of 13V.

Thus, the voltage output is cut off, so that overcurrent can be prevented from being applied to the power output line 810, the ground line 820 and the SMPS 400.

Third, the voltage cut-off state in which the switching IC 510 cuts off the voltage as the short-circuit is maintained will be described below.

As described in the above exemplary embodiment, if the voltage output is cut off by the switching IC 510, the posterior end of the switching IC 510 has 0V even though the SMPS 400 outputs the voltage of 13V. Here, the first node 811 is placed at the posterior end of the switching IC 510, and therefore the first sensor 550 does not output any voltage.

The voltage of 5V output from the SMPS 400 is adjusted to about 1.4V at the third node 823 by the two voltage dividing resistors 561 and 563. The voltage of about 1.4V is continuously supplied to the control IC 530 through the second sensing line 840 and the control input line 850.

The control IC 530 uses the voltage of about 1.4V as an operating power, and keeps the switching IC from cutting off the voltage output. Thus, the control IC 530 can operate even though the voltage output is cut off by the switching IC 510.

Fourth, the released short-circuit state where the short-circuit between the voltage output line 810 and the ground line 820 is released will be described below.

If the short-circuit is released, the voltage applied at the first node 811 is still maintained at the ground level since the switching IC 510 cuts off the voltage output. Further, the first sensor 550 does not output any voltage to the sixth node 836.

As the short-circuit is released, the sequential voltage drops in the second to fifth nodes 822 to 825 are also released in the ground line 820. That is, all the second to fifth nodes 822 to 825 have the voltage of 5V.

Thus, the voltage of 5V is applied from the third node 823 to the sixth node 836 and input to the control IC 530. The control IC 530 outputs the high signal as receiving the voltage of 5V, and the switching IC 510 allows the output of the voltage of 13V.

As the voltage of 13V is allowed to be output, the first node 811 has the voltage of 13V. The voltage of 13V is dropped down into 5V by the first sensor 550, and thus the voltage of 5V is finally input to the control IC 530 together with the voltage of 5V from the third node 823.

Since the voltage of 5V is continuously input to the control IC 530, the switching IC 510 outputs the voltage of 13V through the power output line 810.

According to the foregoing exemplary embodiments, the voltage of 13V can be controlled to be selectively output according to whether or not the power output line 810 and the ground line 820 are short-circuited.

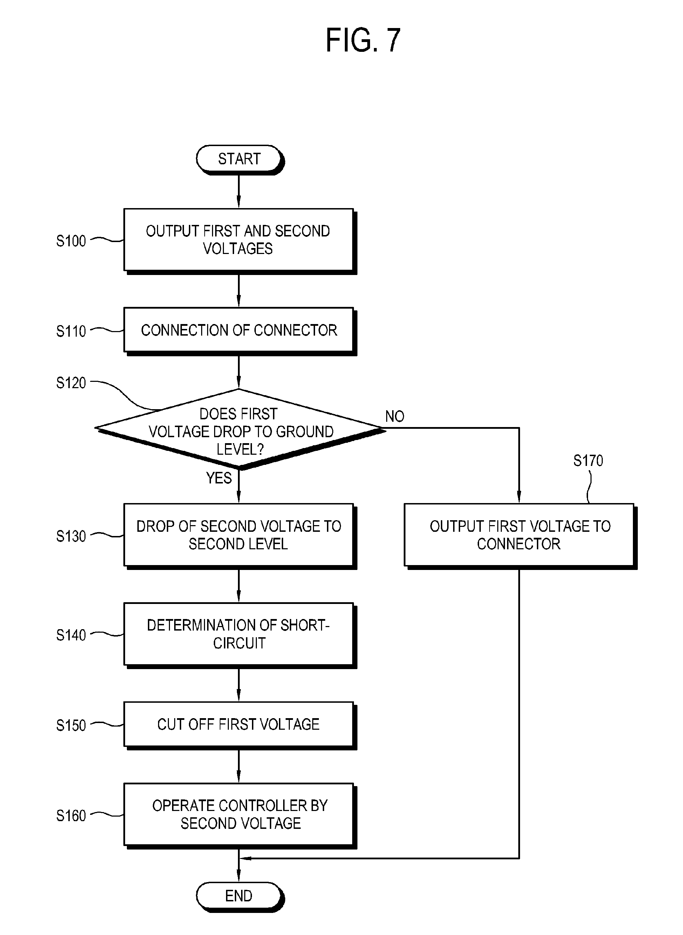

Below, the operation of the power output control circuit 500 in the display apparatus 1 according to an exemplary embodiment will be described with reference to FIG. 7. FIG. 7 is a control flowchart showing an example of the operation. Here, an initial state is not the short-circuited state but the normal state.

Referring to FIG. 7, at operation S100, the SMPS 400 outputs the first voltage and the second voltage. At operation S110, a user connects the connector 30 to the connector receptacle 600.

At operation S120, the sensor 520 senses whether the first voltage is dropped to the ground level. If it is sensed that the first voltage is dropped to the ground level, the second voltage is also dropped from the first level to the second level at operation S130. At operation S140, the sensor 520 senses this voltage drop and thus determines it as the short-circuit state.

At operation S150, the controller 530 cuts off the output of the first voltage according to sensing results. If the output of the first voltage is cut off, the controller 530 is operated by the supply of the second voltage at operation S160.

In the operation S120, if it sensed that the first voltage is not dropped to the ground level, the SMPS 400 outputs the first voltage to the connector 30 at operation S170.

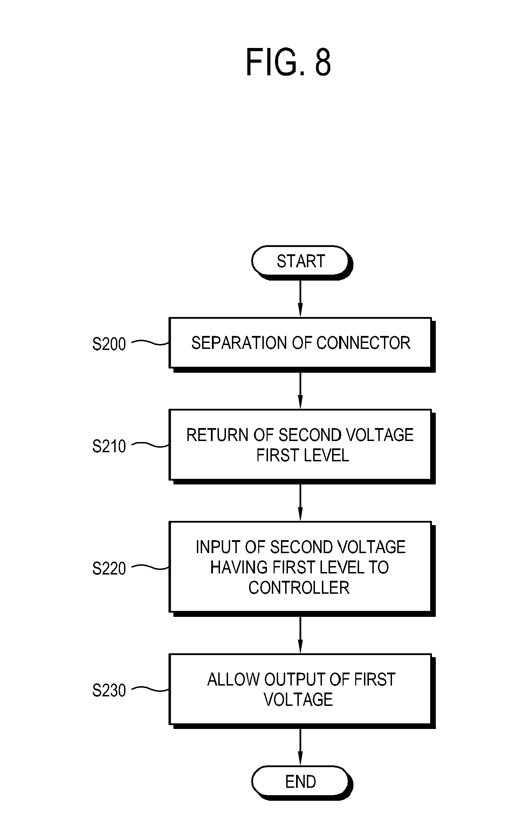

In the state that the output of the first voltage is cut off in the operation of FIG. 7, if the short-circuit is released, the power output control circuit 500 operates as follows, which will be described with reference to FIG. 8. FIG. 8 is a control flowchart of an example of such an operation.

As shown in FIG. 8, if the connector 30 is disconnected, the short-circuit is also released, so that the power output line 810 and the ground line 820 can become insulated from each other at operation S200.

Thus, the second voltage recovers from the second level to the first level at operation S210, so that the second voltage having the first level can be input to the controller 530 at operation S220. If receiving the second voltage having the first level, the controller 530 allows the first voltage to be output.

In the foregoing exemplary embodiments, the circuit configurations and the level changes are described in detail, but are not limited thereto. Alternatively, these are variously changeable in realizing the present inventive concept.

Also, various standards shown in the above-described embodiments are nothing but examples, and the standards themselves cannot limit the scope.

Further, in the foregoing exemplary embodiment, the supporting unit 20 for rotating the main body 10 is described as a component that receives the power from the main body 10, but it is not limited thereto. Alternatively, the present inventive concept can be applied to any external device that can be connected to the main body 10 via the connector 30.

Although a few exemplary embodiments have been shown and described, it will be appreciated by those skilled in the art that changes may be made in these exemplary embodiments without departing from the principles of the invention, the scope of which is defined in the appended claims.

## Claims

1. A display apparatus comprising:
a display unit;
a video signal processor which processes a video signal to be displayable on the display unit;
a power supply which supplies power to the display unit and the video signal processor;
a connector receptacle to which a connector of an external device is connected and which comprises a plurality of terminals provided for data communication and power output from the power supply to at least the external device;
a switching unit which switches voltage output from the power supply to the connector receptacle; and
a switching control circuit which senses whether the plurality of terminals in the connector receptacle are in electrically contact with each other and controls the switching unit so that the voltage output from the power supply can be selectively allowed or cut off with respect to the connector receptacle according to sensing results.

2. The display apparatus according to claim 1, wherein the connector receptacle comprises a power output terminal and a ground terminal respectively connected to the power supply, and
the switching control circuit senses whether the power output terminal and the ground terminal are in contact with each other by the connector connected to the connector receptacle, and selectively allows or cuts off the voltage output with respect to the power output terminal.

3. The display apparatus according to claim 2, wherein the switching control circuit cuts off the voltage output to the power output terminal if sensing the power output terminal and the ground terminal are in contact with each other, and allows the voltage output to the power output terminal if sensing the power output terminal and the ground terminal are not in contact with each other.

4. The display apparatus according to claim 2, wherein the power supply outputs a first voltage and a second voltage to the power output terminal and the ground terminal, respectively, and
the switching control circuit determines that the power output terminal and the ground terminal are in contact with each other if the first voltage is dropped to a ground level.

5. The display apparatus according to claim 4, wherein the switching control circuit determines that the contact is released if the second voltage that is dropped from a first level to a second level by the contact is changed to the first level.

6. The display apparatus according to claim 2, wherein the power supply outputs a first voltage and a second voltage to the power output terminal and the ground terminal, respectively, and
the switching control circuit comprises:
a first sensor to sense whether a level of the first voltage output from the switching unit is dropped down;
a second sensor to sense whether a level of the second voltage is changed corresponding to the contact or the contact release; and
a controller to selectively control a switching operation of the switching unit in response to respective sensing results.

7. The display apparatus according to claim 6, wherein the first voltage and the second voltage respectively output from the first sensor and the second sensor are input to one input terminal of the controller, and
the first sensor drops the first voltage down to have the same level as the second voltage in the state that the contact is released.

8. The display apparatus according to claim 6, wherein the second sensor drops the second voltage from a first level to a second level and outputs the dropped voltage to the controller if the contact is performed, and changes the second voltage from the second level to the first level and outputs the changed voltage to the controller if the contact is released.

9. The display apparatus according to claim 8, wherein the second sensor comprises at least two voltage dividing resistors arranged in series with a node therebetween branched from an output line of the second voltage to the controller, and provided for selectively changing the voltage output from the node according to the contact.

10. The display apparatus according to claim 6, wherein the controller uses the second voltage supplied from the second sensor as an operating power for the controller while an output of the first voltage is cut off by the switching unit.

11. The display apparatus according to claim 1, wherein the external device comprises a supporting unit that supports the display apparatus and rotates the display apparatus at a predetermined angle, and
the supporting unit receives power for rotating the display apparatus from the power supply through the connector.

12. A method of controlling power output in a display apparatus comprising a power supply, the method comprising:
connecting a connector of an external device with a connector receptacle comprising a plurality of terminals connected to the power supply;
sensing whether the plurality of terminals come into contact with each other by the connected connector; and
cutting off voltage output from the power supply to the connector receptacle if it is sensed that the plurality of terminals are in contact with each other, and allowing the voltage output from the power supply to the connector receptacle if it is sensed that the plurality of terminals are not in contact with each other.

13. The method according to claim 12, wherein the connector receptacle comprises a power output terminal and a ground terminal respectively connected to the power supply, and
the sensing comprises sensing whether the power output terminal and the ground terminal are in contact with each other by the connector connected to the connector receptacle.

14. The method according to claim 13, wherein
the connecting the connector comprises outputting a first voltage and a second voltage from the power supply to the power output terminal and the ground terminal, respectively, and
the sensing comprises determining that the power output terminal and the ground terminal are in contact with each other if the first voltage is dropped into a ground level.

15. The method according to claim 14, wherein the sensing further comprises determining that the contact is released if the second voltage that is dropped from a first level to a second level by the contact is changed to the first level.
